Europäisches Patentamt

European Patent Office

Office européen des brevets

(11) Veröffentlichungsnummer: **0 129 871**
**A1**

## (12) EUROPÄISCHE PATENTANMELDUNG

(21) Anmeldenummer: **84107177.2**

(22) Anmeldetag: **22.06.84**

(51) Int. Cl.⁴: **C 10 J 3/72**
**G 01 N 1/22**

(30) Priorität: **24.06.83 DE 3322798**

(43) Veröffentlichungstag der Anmeldung:
**02.01.85 Patentblatt 85/1**

(84) Benannte Vertragsstaaten:
**BE DE FR GB NL**

(71) Anmelder: **RUHRKOHLE AKTIENGESELLSCHAFT**
**Rellinghauser Strasse 1 Postfach 10 32 62**
**D-4300 Essen 1(DE)**

(72) Erfinder: **Richter, Artur, Ing.grad.**
**Langensiepenstrasse 25**
**D-4330 Mülheim(DE)**

(54) Probenahmeventil für eine Kohlevergasungsanlage mit einem Flugstaub- oder Wirbelschicht-Druckreaktor.

(57) Die Erfindung betrifft ein Probenahmeventil für eine Kohlevergasungsanlage mit einem Flugstauboder Wirbelschicht-Druckreaktor, wobei mit dem Probenahmeventil eine flüssige oder gasförmige Probe aus dem unter hoher Temperatur austretenden Rohgas entnommen wird. Um die Betriebsbedingungen optimal regeln zu können, muß die Zusammensetzung des Rohgases bereits in möglichst großer Nähe des Reaktorausganges festgestellt werden können, und zwar trotz der hohen Temperatur und eines gegebenenfalls vorhandenen hohen kondensationsfähigen Feststoffgehaltes an dieser Stelle. Um diese Möglichkeit zu gewährleisten, soll das Probenahmeventil eine Heizanlage und/oder eine Reinigungsspülung aufweisen, wobei die Beheizung einer Kondensation entgegenwirkt und die Reinigungsspülung zur Beseitigung dennoch auftretender Kondensationsbestandteile dient.

Croydon Printing Company Ltd

- 1 -

Probenahmeventil für eine Kohlevergasungsanlage mit einem Flugstaub- oder Wirbelschicht-Druckreaktor

Die Erfindung betrifft ein Probenahmeventil für eine Kohlevergasungsanlage mit einem Flugstaub- oder Wirbelschicht-Druckreaktor, wobei mit dem Probenahmeventil eine flüssige oder gasförmige Probe aus dem unter hoher Temperatur austretenden Rohgas entnommen wird.

Bei Flugstaub- oder Wirbelschicht-Druckreaktoren wird Kohlenstaub z.B. in Form einer Kohle-Wasser-Suspension in den Druckreaktor eingetragen und unter Anwesenheit von Wasser und Sauerstoff zu einem CO- und $H_2$-haltigen Rohgas vergast. Wenn nachfolgend jeweils nur von einem Druckreaktor die Rede ist, so handelt es sich hierbei um einen Druckreaktor eines der beiden zuvor genannten Reaktortypen.

Bei einem derartigen Reaktor erfolgt die Vergasung in der Staubwolke zumeist mit ganz kurzer Flamme, wobei Sauerstoff und feinstgemahlene Kohle verwendet werden, deren Korngröße kleiner als 0,1 mm ist. Die gutgemischten Reaktionskomponenten werden mit großer Geschwindigkeit über mehrere Düsen im Gleichstrom in den Reaktor eingeblasen. Bei dieser Vergasung wird die günstige Wirkung der großen Oberfläche des Brennstoffes ausgenutzt. Die Reaktion besteht teilweise aus der Umsetzung von Kohlenstoff mit Sauerstoff zu Kohlenmonoxyd.

Neben dieser Reaktion tritt noch aufgrund des mitgeführten Wassers bzw. zusätzlich eingeblasenen Wasserdampfes die Wassergasreaktion auf. Danach wird Kohlenstoff und Wasser zu Kohlenmonoxyd und freiem Wasserstoff umgesetzt. Diese Umsetzung erfolgt bei den üblicherweise über 1 200° C liegenden Temperaturen im Vergasungsreaktor derart, daß das austretende Rohgas hauptsächlich aus CO und $H_2$ mit relativ geringen Anteilen von $CO_2$ und unzersetztem Wasserdampf besteht. Um Schlackenfluß zu gewährleisten, liegt die Gasendtemperatur oberhalb des Aschenfließpunktes .

Die Hauptreaktion im Vergasungsreaktor soll vollständig und schnell mit geringen Wärmeverlusten ablaufen. Zu diesem Zweck werden die Reaktanten gründlich vermischt. Der Stoffumsatz der dann folgenden heterogenen Reaktion hängt von der dargebotenen Brennstoffoberfläche, der Konzentration der Vergasungsmittel, der Temperaturhöhe, dem Turbulenzgrad in der Strömung und der Aufenthaltszeit im Reaktor ab.

Die optimale Gestaltung dieser Verfahrensbedingungen erfordert einen erheblichen regeltechnischen Aufwand, der sich vereinfacht, wenn der Kohlenstaub in Form einer Kohle-Wasser-Suspension mit Hilfe von Druckpumpen in den Vergasungsreaktor eindosiert wird. Gleichwohl birgt die Regelung an Vergasungsreaktoren noch gravierende Probleme. Als unverzichtbare Regelgröße hat sich dabei die Zusammensetzung des Rohgases erwiesen. Zur Probenahme wurde bisher zu einem frühestmöglichen Zeitpunkt nach Sättigung und Reinigung des Rohgases von dem aus dem Kohlevergasungsreaktor austretenden Gas durch eine geeignete Anschlußleitung die gewünschte Probemenge abgezogen. Die Anschlußleitung mündet über ein zwischengeschaltetes Probenahmeventil an die dem Reaktor nachgeschaltete Gas-

- 5 -

leitung bzw. dem Reaktor nachgeschaltete Strahlungs-
und/oder Konvektionskühler. Nach Öffnen des Probeventils strömt aufgrund des in der Vergasungsanlage
herrschenden Druckes Rohgas in die Anschlußleitung.
Die anfallende Probemenge hängt ab von der Zeitdauer
zwischen Öffnen und Schließen des Probenahmeventils,
das die Anschlußleitung an deren Mündung verschließt.

Das als Probemenge gezogene Gas ist jedoch häufig
nicht repräsentativ für das Rohgas, da die hohe
Rohgastemperatur, deren hoher Druck und der Feststoffgehalt im Gas, der bei Temperaturreduktion dazu
neigt sich niederzuschlagen, die Probenahme erheblich erschweren. Vor allem das Auskondensieren schwerer
Kohlenwasserstoffe und Chloride beeinträchtigen einen
einwandfreien Betrieb der Probenahmeventile.

Das führt zu einer immer weiter down-stream-seitigen
Anordnung der Probenahmeventile und zugehörenden
Anschlußleitungen. In der Praxis finden sich diese
Anschlußstellen für die Probenahme im Anschluß an
die Gasreinigungsstufen. Abgesehen von dem Nachteil
einer schwerwiegenden Verzögerung in der Messung
der Rohgaszusammensetzung ist das auch an diesen
Stellen noch mit Gefahr von Kondensation und damit
bedingten Verstopfungen bzw. Verfälschungen der gezogenen Rohgasproben verbunden.

- 4 -

Der Erfindung liegt daher die Aufgabe zugrunde, ein Probenahmeventil zu schaffen, das bei funktionssicherem Betrieb eine möglichst nahe Anordnung am Reaktor erlaubt.

Nach der Erfindung wird das durch eine Heizanlage und/ oder eine Reinigungs-Spülung des Probenahmeventils erreicht. Mit Hilfe der Beheizung des Probenahmeventils wird einer Kondensation von Gasbestandteilen entgegengewirkt. Darüber hinaus lassen sich unvorhergesehene Kondensationen (z.B. bei größeren Intervallen der Probenahme) mit der erfindungsgemäßen Reinigungs-Spülung entfernen. Die Reinigungsspülung erfolgt in der Weise, daß anstelle des Rohgasstromes Reinigungsmedium, in der Regel eine Spülflüssigkeit, durch das Probenahmeventil und das zugehörende Leitungssystem gepreßt wird.

Mit besonderem Vorteil lassen sich die erfindungsgemäße Beheizung des Probenahmeventils und die Reinigungs-Spülung miteinander kombinieren, indem eine Heizanlage an der Spülleitung für die Reinigungs-Spülung angeordnet wird. Mit der so angeordneten Heizanlage läßt sich das Spülmittel aufheizen und das Probenahmeventil mit durchströmendem Spülmittel so vorwärmen, daß bei einer nach-

- 5 -

folgenden Probenahme das eintretende Rohgas keine kalten, Kondensationen verursachende Wandflächen vorfindet.

Weiterhin wird erfindungsgemäß vorgeschlagen, daß das Ventil eine Spindel aufweist, die in axialer Richtung in dem Ventilgehäuse geführt ist und eine Durchtrittsöffnung im Ventilgehäuse gegenüber einer Rohgas führenden Leitung verschließt, und daß die Spülleitung in der Schließstellung der Spindel hinter ihrer Schließfläche am Ventilgehäuse in einen hinter der Durchtrittsöffnung liegenden Ringraum mündet.

Hierdurch werden zwei Wirkungen erreicht. Die eine besteht in einer möglichst vollständigen Einwirkung des Spülmittels auf alle mit dem Rohgas in Berührung kommenden Flächen des Probenahmeventils. Die andere Wirkung ist in der Nutzung des Ringraumes im Probenahmeventil zur Leitung für das Spülmittel zu sehen. Ferner ist die Ventilspindel des Probenahmeventils in üblicher Weise mit einem Kegel als Ventilverschluß versehen und durchsetzt den durch den Kegel verschlossenen Ringraum. Die Spindel ist am hinteren Ende im Ventilgehäuse beweglich gelagert und kann in geeigneter Weise angetrieben werden.

Gemäß einer weiteren Ausgestaltung der Erfindung wird vorgeschlagen, daß die Spindel mehrteilig ausgebildet ist, zwischen zwei Teilen eine drehbewegliche Verbindung vorgesehen ist und daß die Spindel im Ventilgehäuse mittels einer Führung drehfest geführt ist. Dadurch ist sichergestellt, daß die Dichtflächen am Ventilkegel und am Ventilgehäuse nicht drehend aufeinandertreffen, sondern geradlinig aneinander angedrückt werden.

- 6 -

Ferner kann die Spindel erfindungsgemäß mit einer Dichtung versehen sein, wobei eine Ausnehmung im Ventilgehäuse vor der Dichtung mit der Spülleitung verbunden ist. Dies ermöglicht ein stufenweises Abbauen des Druckes bzw. einen gezielten Einsatz von Dichtungen.

Die vorstehende Erfindung ist nicht nur für eine Probenahme aus Gasströmen, sondern auch aus Flüssigkeiten anwendbar, die im nahen Bereich der Raumtemperatur ihren Stockpunkt haben. Dies ist beispielsweise bei Teer und Vakuumrückständen aus der Aufarbeitung von Rohöl oder aus Kohleverflüssigungsanlagen der Fall.

Nachfolgend werden zwei Ausführungsbeispiele der Erfindung anhand einer Zeichnung näher beschreiben. Im einzelnen zeigen:

Fig. 1 als schematischer Längsschnitt eine erste Ausführungsform des Probenahmeventils;

Fig. 2 als schematischer Längsschnitt eine abgewandelte Ausführungsform;

Fig. 3 eine schematische Schaltung zur Verwendung zusammen mit einem Probenahmeventil nach Fig. 1 oder 2.

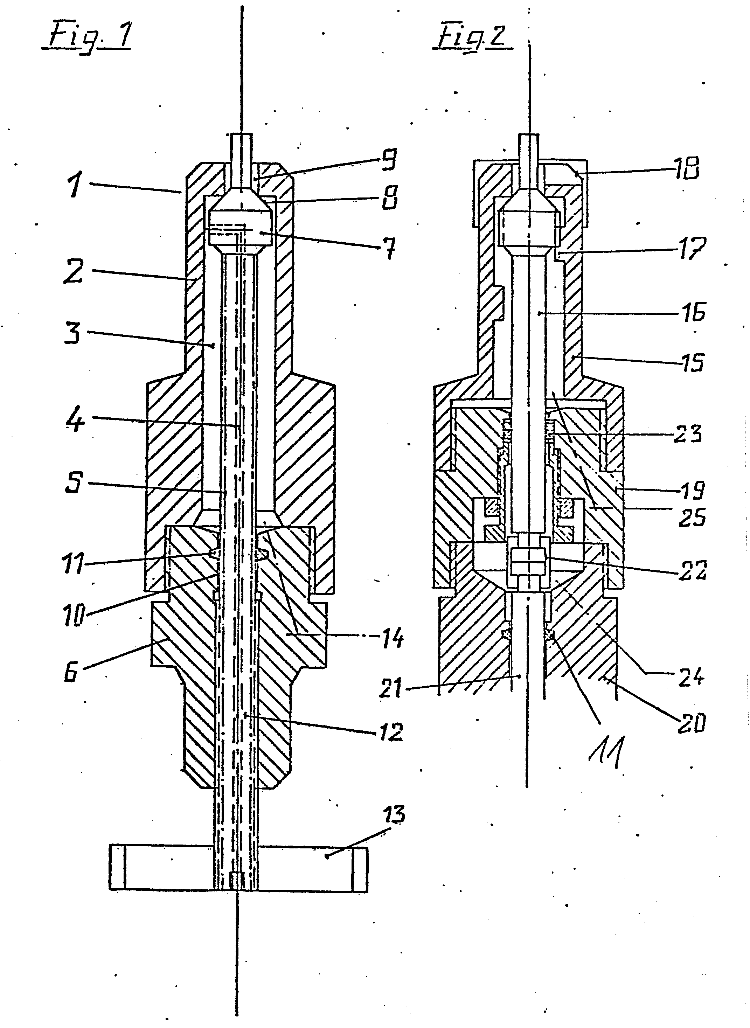

In Fig. 1 ist mit 1 das Ventilgehäuse des Probenahmeventils bezeichnet, Das Ventilgehäuse ist mehrteilig ausgebildet und besteht aus ineinander verschraubten Teilen 2 und 6. Das Teil 2 bildet den Sitz des Probenahmeventils an der jeweils gewünschten Stelle in der Rohgas führenden Leitung. Das Teil 2 umschließt eine Spindel 12 mit einem Ventilverschluß 7. Der Ventilverschluß besitzt an der der Spindel 12 abgewandten Seite einen Ventilkegel 8, der eine Durchtrittsöffnung 9
im Teil 2 verschließt.

Unterhalb des Ventilverschlusses 7 bis in den Bereich der
Dichtung 11 ist innerhalb der Spindel 12 eine Beheizmöglichkeit 5 eingebracht. Entweder kann ein Wärmeträger
mit entsprechend hoher Temperatur in die Spindel 12
einströmen oder es kann in dieser eine elektrische Widerstandsbeheizung vorgesehen werden.

Das mit dem Teil 2 verschraubte Teil 6 umschließt das hintere
Ende der Spindel 12 und besitzt im vorderen Teil eine Durchgangsbohrung 10, die mit ausreichendem Bewegungsspiel
für eine hin- und hergehende Spindelbewegung versehen ist.
In die Durchgangsbohrung 10 ist zugleich eine Nut für
einen Dichtungsring 11 eingearbeitet, der schließend die
Spindel 12 umgibt. Im hinteren Teil besitzt das Teil 6
eine mit dem Gewinde der Spindel 12 zusammenwirkende
Gewindebohrung. Die Spindel 12 wird über ein Handrad
oder Zahnrad 13 bewegt, das auf dem aus dem Ventilgehäuse 1
bzw. 6 herausragenden Spindelende fest angeordnet ist.

Durch die Spindel 12 führt eine Durchtrittsbohrung 4, die am
äußeren Umfang des Ventilverschlusses 7 mündet. Dadurch
kann ein Heizmedium oder Spülmedium, das durch die Durchtrittsbohrung 4 gepreßt wird, am Ventilverschluß 7 austreten und durch den die Spindel 12 und den Ventilverschluß 7 dort umgebenden Ringraum 3 einer strichpunktiert
dargestellten Leitung 14 zugeführt werden. Der Ringraum 3
wird gebildet durch den Abstand zwischen dem äußeren
Umfang der Spindel 12 und dem Ventilverschluß 7 und
der die Spindel 12 und den Ventilverschluß 7 umgebenden
Innenwand des Ventilgehäuses 1.

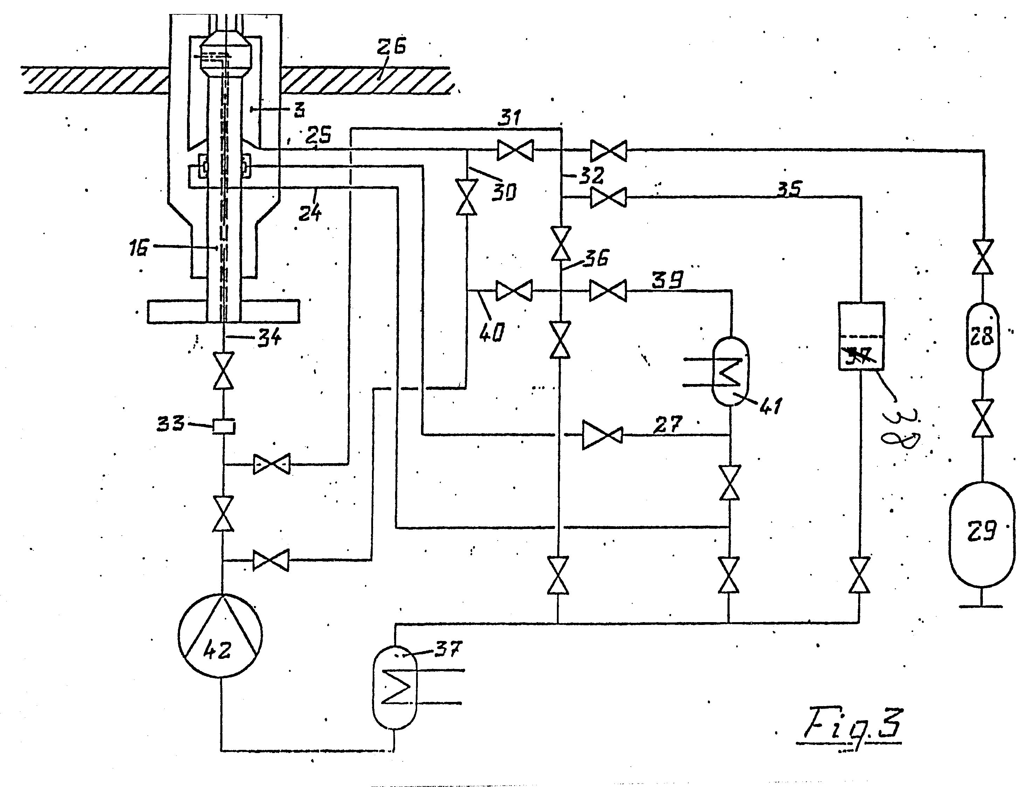

Nach Fig. 2 besteht das Ventilgehäuse aus drei Teilen 15, 19 und 20. Teil 20 erfüllt im wesentlichen die gleiche Funktion wie das Teil 6 bezüglich des Zusammenwirkens mit der Spindel.

Die Spindel ist nach Fig. 2 nicht mehr einteilig, sondern zweiteilig ausgebildet, wobei zwischen den Spindelteilen 16 und 21 eine Kupplung 22 vorgesehen ist, die eine rein axialer Bewegung des Ventilkörpers bei einer Drehbewegung des Spindelteils 21 erlaubt. Zu einer axialen Bewegung ist der Ventilverschluß mit Führungsnuten versehen, in die das Ventilgehäuse mit einem Führungsteil 17 greift. Zusätzlich zu dem nach Fig. 1 vorgesehenen Dichtring 11 besitzt das Probenahmeventil nach Fig. 2 im Teil 19 eine Dichtung 23. Die vor der Dichtung 23 vorgesehene Ausnehmung in den Teilen 19 und 20 ist mit zwei Leitungen 24 für Ein- und Auslaß verbunden, von denen in Fig. 2 nur eine erkennbar ist.

Die in Fig. 1 mit 14 bezeichnete Leitung befindet sich bei dem Probenahmeventil nach Fig. 2 im Teil 19, trägt dort die Bezeichnung 25 und teilt sich in Ein- und Auslaß.

Fig. 3 zeigt die Probenahmeventile nach Fig. 1 und 2 in schematischer Vereinfachung im montierten Zustand. Die Probenahmestelle befindet sich in einem unmittelbar einem Reaktor einer Kohlevergasungsanlage nachgeschalteten Abführrohr, dessen Wandung mit 26 bezeichnet ist. Zusätzlich zur Leitung 24 ist dabei eine weitere Leitung 27 vorgesehen. Mit den beiden Leitungen 24 und 27 lassen sich in der Ausnehmung zwischen den Dichtungen 23 und 11 an verschiedenen Stellen eine Druckreduzierung oder
eine Temperatursteuerung erreichen, soweit sie erforderlich
sind.

Die Leitung 25 führt über verschiedene zwischengeschaltete Ventile zu einer Probenahmeflasche 28, der vorzugsweise ein Sammelbehälter 29 nachgeschaltet ist. Die
Leitung 25 besitzt Abzweigungen 30, 31 und 32. Über die
Abzweigungen 30 und 31 kann das Spül- oder Reinigungsmedium einer mit der Spindel 16 über eine geeignete
Kupplung 33 verbundenen Leitung 34 zugeführt werden.
Dadurch kann Medium in den Ringraum 3 eingeleitet
und über die Leitungen 25, die Abzweigung _ und 31
und die Leitung 34 im Kreis geführt werden.

Die Abzweigung 32 gabelt sich ihrerseits in Leitungen 35
und 36, von denen die Leitung 36 unmittelbar zu einem
Behälter 37 mit eingebauter Heizanlage führt und die
Leitung 35 über ein zwischengeschaltetes Filter 38 zum
Behälter 37 führt. Zusätzlich besitzt die Leitung 36
Abzweigungen 39 und 40, von denen die Abzweigung 40
zur Abzweigung 30 führt und die Abzweigung 39 ihrerseits
über einen Behälter 41 mit eingebauter Kühlanlage entweder
zum Behälter 37 oder als Dichtungschutz über die Leitung 27 in das Ventil gelangt.

Der Behälter 37 ist seinerseits über eine zwischengeschaltete Druckpumpe 42 mit der Leitung 34 verbunden. Alle
Leitungen sind über zwischengeschaltete Steuerventile
gegeneinander verriegelbar.

Im Störungsfalle eines verschmutzten Probenahmeventils
wird vorgeheiztes Öl oder Lösungsmittel mittels der
Druckpumpe 42 je nach Bedarf über die Leitungen 25 und 34 in den Innenraum des Probenahmeventils geleitet und
löst dort vorhandene Feststoffe. Durch Verriegeln aller
übrigen Steuerventile wird die verschmutzte Lösung
über die Leitung 25 und die Abzweigung 32 und 35 dem
Filter 37 zugeführt. Das dort gereinigte Öl oder Lösungsmittel läuft zurück in den Behälter 37.

Bei zu kaltem Probenahmeventil wird das im System vorhandene Öl oder Lösungsmittel im Sammelbehälter 37 aufgeheizt und das Ventil über die Leitungen 34 und 25
solange beaufschlagt, bis es die gewünschte Temperatur
erreicht hat. Das über die Leitung 25 aus dem Probenahmeventil austretende Öl oder Lösungsmittel wird über die
Abzweigung 32, die Leitung 36 und die Abzweigung 39
geleitet. Dabei durchläuft das Öl oder Lösungsmittel den
Behälter 41 und kann dort bei Bedarf gekühlt werden. Dies
ist der Fall bei besonders hohen Temperaturen und/oder
Drücken des Rohgases, für die konventionelle Dichtungssysteme nicht geeignet sind, so daß der Rücklauf nach
entsprechender Temperaturkühlung und Druckreduktion über
die Leitungen 24 und 27 geleitet wird, um ein- oder mehrstufig die Dichtungen zu entlasten. Nach Erreichen
der gewünschten Temperatur kann durch Ändern der Ventilstellung ein Durchströmen der Ausnehmungen für die Dichtungen
über die Leitungen 24 und 27 mit Öl- oder Lösungsmittel
zum Schutz des Dichtsystems fortgeführt werden.

Im übrigen kann die Reinigung und Erwärmung des Probenahmeventils unter Druck bei geöffnetem Ventilsitz erfolgen.
An dem ventilkegelseitigen Ende des Probenahmeventils ist
ein Überlauf 18 vorgesehen, der das austretende Medium
in einen Auffangraum leitet, aus dem es diskontinuierlich
abgezogen werden kann.

- 17 -

Zur Probenahme wird das gereinigte und mittels indifferentem Heizmittel auf Temperatur gebrachte Ventil mit
Zubehör über die Leitung 25 mit der Probenahmeflasche 28
verbunden und werden die übrigen Leitungen verriegelt
und Teil 33 entkuppelt. Bei geöffnetem Probenahmeventil
gelangt dann Rohgas in die Probenahmeflasche 28. Zugleich gewährleistet eine wahlweise in der Spindel 16
angeordnete elektrische Widerstandsheizung, daß die
vorgesehene Temperatur des Probenahmeventils eingehalten
wird. Die nicht dargestellte Widerstandsheizung läßt
sich zugleich zur Auflösung von unvorhergesehenen Kondensationen bei durchlaufendem Spülmittel mitbenutzen.

Ansprüche:

1. Probenahmeventil für eine Kohlevergasungsanlage mit einem Flugstaub- oder Wirbelschicht-Druckreaktor, wobei mit dem Probenahmeventil eine flüssige oder gasförmige Probe aus dem unter hoher Temperatur austretenden Rohgas entnommen wird, gekennzeichnet durch eine Heizanlage (5,37,41) und/oder eine Reinigungsspülung.

2. Probenahmeventil nach Anspruch 1, dadurch gekennzeichnet, daß in der Spülleitung (34,39) eine Heizanlage (37,41) für das Spülmittel zwischengeschaltet ist und/oder eine Heizanlage (5) während der Probenahme zugeschaltet ist.

3. Probenahmeventil nach Anspruch 2, dadurch gekennzeichnet, daß das Ventil (1) eine Spindel (12) aufweist, die in axialer Richtung in dem Ventilgehäuse (2,6) geführt ist und eine Druchtrittsöffnung (9) im Ventilgehäuse gegenüber einer Rohgas führenden Leitung (26) verschließt, und daß die Spülleitung (4) in der Schließstellung der Spindel (12) hinter ihrer Schließfläche am Ventilgehäse (2,6) in einen hinter der Durchtrittsöffnung (9) liegenden Ringraum (3) mündet.

4. Probenahmeventil nach Anspruch 3, dadurch gekennzeichnet, daß die Spindel (16,21) mehrteilig ausgebildet ist, zwischen zwei Teilen eine drehbewegliche Verbindung (22) vorgesehen ist und die Spindel (16) im Ventilgehäuse (15) mittels einer Führung (17) drehfest geführt ist.

5. Probenahmeventil nach Anspruch 4 oder 5, dadurch gekennzeichnet, daß die Spindel (16,21) mit einer Dichtung (23) versehen ist und die Ausnehmung im Ventilgehäuse (19,20) vor der Dichtung (23) mit der Spülleitung verbunden ist.

6. Probenahmeventil nach Anspruch 4 oder 5, dadurch gekennzeichnet, daß die Spülleitung (4) durch die Spindel (12) geführt ist.

Fig. 1

Fig. 2

Fig.3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-2 682 277 (MARSHALL) <br> * Spalte 4, Zeilen 20-26; Spalten 5-6; Ansprüche * <br> --- | 1,3,6 | C 10 J 3/72 <br> G 01 N 1/22 |
| A | US-A-3 517 557 (GRANGER) <br> * Spalten 3-4; Ansprüche 1-8 * <br> --- | 1 | |
| A | US-A-3 486 382 (VIVARES) <br> * Spalte 3, Zeilen 66-73 * <br> --- | 1 | |
| A | US-A-2 556 557 (SCHWEITZER) <br> * Spalte 2, Zeilen 26-36 * <br> --- | 1 | |
| A | GB-A- 867 823 (TEXACO) <br> ----- | | |

RECHERCHIERTE
SACHGEBIETE (Int. Cl. 3)

C 10 J
G 01 N
C 10 G
F 16 K

Der vorliegende Recherchenbericht wurde für alle Patentansprüche erstellt.

| Recherchenort <br> DEN HAAG | Abschlußdatum der Recherche <br> 13-09-1984 | Prüfer <br> WENDLING J.P. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82